# EUROPEAN PATENT SPECIFICATION

(11) **EP 3 478 886 B1**
(45) Date of publication and mention of the grant of the patent: **27.11.2024**
(21) Application number: 17740638.6
(22) Date of filing: 29.06.2017
(51) Int. Cl.: D04H 1/4209, D04H 1/4218, E04B 1/62, C03C 25/00

(54) **MINERAL WOOL INSULATING MAT**
ISOLIERMATTE AUS MINERALWOLLE
TAPIS ISOLANT EN LAINE MINÉRALE

(30) Priority: 30.06.2016 GB 201611398
(43) Date of publication of application: 08.05.2019
(73) Proprietor: Knauf Insulation SPRL, 4600 Visé (BE)
(72) Inventor: GUILLEMOT, Gwenaël, 1435 Mont-Saint-Guibert (BE)
(74) Representative: ARC-IP
(86) International application number: PCT/EP2017/066229
(87) International publication number: WO 2018/002280

(56) References cited:
- CN-A- 104 532 973
- CN-U- 202 324 229
- CN-U- 202 627 242
- US-A1- 2007 154 695

## Description

This invention relates to a mineral wool insulating element, notably to a meshed mineral wool mat, and to structures comprising a mineral wool insulating element. As used herein the term meshed mineral wool mat means a mineral wool mat held together by being sandwiched between meshes covering its major surfaces.

A known type of meshed mineral wool mat comprises a rock mineral wool blanket provided with a galvanized steel mesh, typically chicken wire, covering one major surface and having galvanized steel wire stitched through the mat such that the mineral wool blanket is sandwiched and held between the mesh at one major surface and the stitching at its other major surface. Such products are often referred to as "wired mat". Example of insulating elements are disclosed in CN104532973, CN202627242, CN202324229 and US2007/154695.

In accordance with one of its aspects, the present invention provides a mineral wool insulating mat as defined in claim 1. The dependent claims define preferred and/or alternative embodiments.

The non-metallic mesh may be an ensemble or an assembly of threads with apertures or open interstices between the threads; it may be a net or a web of threads. It may be a netting, a scrim, a fleece, a veil or a lattice. The terminology "non-metallic mesh" as used herein means a mesh comprising a non-metallic material; preferably, the non-metallic mesh consists of or consists essentially of non-metallic material(s). The non-metallic mesh may be a woven or non-woven material, for example a mineral fibre veil; it may comprise a woven textile or a net. It may be loosely netted, notably in the form of an openwork fabric made of threads that are knotted or otherwise secured together at regular intervals. The threads of the non-metallic mesh may be woven, knitted, crocheted, braided, layered and/or glued. The non-metallic mesh may have at least 5, at least 10 or at least 15 threads per centimetre, in its transverse and/or longitudinal direction.

The non-metallic mesh may comprise fibres or threads selected from mineral fibres, basalt fibres, glass fibres, carbon fibres, natural fibres, synthetic fibres, organic fibres, polyvinyl alcohol (PVA), polypropylene (PP), polyester (PES), fibres, polyethylene (PE) fibres, polyethylene terephthalate (PET) fibres, polyamide fibres, polysulphone fibres, aramid fibres, para-aramid fibres and poly paraphenylene terephthalamide fibres (eg poly(p-phenyleneterephtalamide) fibres). The fibres or threads may comprise single fibres or a plurality of fibres arranged to form a single thread, for example by being intertwined.

The mesh may comprise openings or interstices, notably when it has a woven or netted structure. Such openings or interstices, notably at portions covering at least 50%, at least 60%, at least 70% or at least 80% of the area of the major surface of the mineral wool blanket, may have an area which is ≥ 0.5 mm², ≥ 1 mm², ≥ 10 mm², ≥ 20 mm², ≥ 80 mm², ≥ 100 mm², ≥ 200 mm² or ≥ 400 mm² and/or ≤ 2500 mm², ≤ 2000 mm² ≤ 1000 or ≤800 mm². The mesh may comprise substantially square or rectangular openings; one or each side or such square or rectangular openings may be ≥ 20mm, ≥ 25mm, ≥ 30mm ≥ 35mm or ≥ 40mm and/or ≤ 70mm, ≤ 65mm or ≤ 60mm. For example, square opening of a size within the range 20 mm × 20 mm to 50 mm × 50 mm, for example about 40 mm × 40 mm, may provide a suitable combination of mechanical resistance and efficient use of material. Openings or interstices at one or more edges of the mesh may be of a different size, notable of a smaller size, than openings or interstices at a central portion of the mesh. This may enable the mesh to have greater resilience, strength or tear resistance at its edges, notably to facilitate attachment at the edges and/or avoid damage or fraying of the edges. The interstices or openings may be substantially square, rectangular, circular, triangular, hexagonal or diamond shaped.

The non-metallic mesh may have an ultimate tensile strength (ie at breakage), uniaxial or biaxial, which is ≤ 20 kN/m, ≤ 15 kN/m, ≤ 10 kN/m or ≤ 8 kN/m notably as measured according to ISO 10319:2015. The non-metallic mesh preferably has sufficient tensile resistance to withstand the force of two edges or two points of the mesh being pulled apart with a force which is ≥ 100 N, ≥ 200 N or ≥ 300 N, for example during attachment of a fastener to connect the two edges or points of the mesh when the insulating element is wrapped around a pipe or secured to by the mesh to a supporting structure.

The non-metallic mesh, particularly a surface of the non-metallic mesh, may be coated, for example with an organic coating, an inorganic coating or a metal coating. The coating may be a fire resistant coating; it may improve fire resistance of the mesh and/or the insulating element. Particularly in the case of a mesh comprising mineral fibres, for example basalt fibres, the coating may facilitate cutting of the mesh, for example using scissors and/or may prevent relative movement between individual fibres of the mesh. For example, the non-metallic mesh may comprise coated basalt fibres, notably basalt fibres coated with a non-combustible coating.

Preferably, both meshes i.e. the mesh arranged at the first major surface of the mineral wool blanket and the mesh arranged at the second major surface, each comprises a non-metallic mesh. Each of the first mesh and the second mesh may have the same construction; alternatively, each may have a different structure. Each of the first mesh and second mesh may or may not be made of the same material(s).

One or each of the first and second meshes may be secured to its corresponding surface of the mineral wool blanket via a bonding agent. The bonding agent may be an organic or inorganic binder, adhesive or a glue. Preferably, the bonding agent is fire-resistant; it may be water glass.

When arranged at the surface of the mineral wool blanket, each of the first and second meshes may extend beyond the edge of the blanket and form flaps. The flaps of the first and second meshes may be turned down along the edges of the blanket and further overlap. Alternatively, the flaps may project beyond the edges of the blanket and be superimposed. The overlapped and/or superimposed flaps of the first and second meshes may be secured together by fasteners.

The first and second meshes may form a sleeve which surrounds the mineral wool blanket. The sleeve may be formed by wrapping the meshes around the mineral wool blanket; particularly in this case, the sleeve may be provided with fasteners at three sides, with a fourth side being formed by a fold in the sleeve. The sleeve may be pre-formed, for example in the form of a tube into which the mineral wool blanket can be introduced; particularly in this case, the sleeve may be provided with fasteners at two opposite sides, with two other opposite sides each being formed by a fold in the sleeve which may also provide a fastener.

One or each of the non-metallic meshes may have a weight ≥ 20 g/m², ≥ 50 g/m², ≥ 100 g/m² or ≥ 200 g/m² and/or ≤ 500 g/m², ≤ 1000 g/m² or ≤ 2000 g/m² ≤ 3000 g/m².

The fasteners may comprise threads; they may comprise metal threads, for example wire, notably steel wire for example galvanized steel wire or stainless steel wire. Preferably, when the fasteners comprise threads they comprise non-metallic threads. The term "non-metallic thread" as used herein means a thread comprising a non-metallic material. The non-metallic threads may consist of or consist essentially of non-metallic material(s). Threads which are entirely non-metallic are preferred, notably to facilitate cutting and/or recycling and/or corrosion resistance. Non-metallic threads reduce the risk of injuries during the handling and avoid or reduce thermal bridges. The non-metallic threads may comprise mineral fibres, organic fibres, basalt fibres, glass fibres, carbon fibres, synthetic fibres, polyethylene terephthalate (PET) fibres, polysulphone fibres, aramid fibres, para-aramid fibres or poly paraphenylene terephthalamide fibres. The threads may be formed by extrusion and/or by assembly of a plurality of fibres. The threads may have a diameter which is ≥ 0.005 mm, ≥ 0.01 mm, ≥ 0.1 mm, ≥ 0.5 mm, ≥ 1 mm or ≥ 2 mm, and/or ≤ 2.5 mm or ≤ 5 mm. Threads of aramid fibres, para-aramid fibres or poly paraphenylene terephthalamide fibres provide particularly suitable properties, notably when used as stitching.

The fasteners comprise one of more threads that are sewn or stitched through the mineral wool blanket. The thread(s) form(s) the second mesh; such a mesh is a network of one of more threads formed by the portions of the thread(s) passing along a major surface of the mineral wool blanket. The thread(s) may follow a path as follows: starting from the first major surface, the thread enters the mineral blanket, passes throughout the mineral blanket, emerges at the second major surface of the blanket, continues along that second major surface, returns back into the mineral wool blanket, passes again through the mineral blanket and emerges at the first major surface of the blanket, continues along the first major surface, returns back into the mineral wool blanket, passes again through the mineral blanket and emerges at second first major surface of the blanket. This path may be repeated a plurality of times to provide a stitching. The fasteners may comprise a plurality of stitching, for example a plurality of substantially parallel stitching through the mineral wool blanket. The stitching of threads through the mineral wool blanket is preferably slack in order to give some flexibility to the mineral wool insulating element. Such flexibility helps maintain the integrity of the mineral wool insulating element when it is submitted to several folding and unfolding steps. This is especially the case when the insulating elements are rolled for transportation, unrolled on site for installation and wrapped around elements, for example pipes or tanks, to be insulated.

The fasteners may comprise closing element(s), notably closing element(s) arranged to secure together edges or flaps of the first and second mesh. The closing element(s) may comprise a snap, hook, zip, loop or eyelet; it may comprise one or more threads arranged to pass through edges or flaps of the first and second mesh so as to secure the edges or flaps together. It may comprise one or more threads arranged to extend beyond the edges or flaps of the first and second mesh. The closing element(s) may comprise one or more threads arranged to be intertwined (or criss-crossed or netted) so as to secure the edges or flaps together. The one or more threads of the closing element may be tied to secure the edges or flaps together.

The closing element(s) may comprise a reversible closure allowing closure, reopening and re-closure at least one time. The closing element may comprise a zip or a hook- and-loop fastener. A reversible closure facilitates inspection and/or replacement of a portion of the mineral wool blanket and access to an installation covered by the insulating mat. This is useful during maintenance and inspection.

The mineral wool blanket of the mineral wool insulating element may comprise non-woven mineral fibres. The mineral fibres may comprise fibres selected from rock fibres, glass fibres and mixtures of rock and glass fibres. The fibres may have an average diameter between 2 µm and 9 µm. The majority of the fibres of the mineral wool blanket may be orientated substantially parallel to its major surfaces. Alternatively, the majority of the fibres of the mineral wool blanket may be orientated substantially perpendicular to its major surfaces. The mineral wool blanket may comprise mineral wool lamellas in which the fibre orientation is predominantly perpendicular to the major surfaces of the blanket.

Particularly for applications with low service temperatures (< 300°C), notably between 100°C and 300 °C, the mineral wool blanket may comprise at least 90% by weight glass mineral wool. Particularly for applications with higher service temperatures (>300 °C), notably between 450°C and 750°C, a mineral wool blanket comprising at least 90% by weight rock mineral fibres is preferred, notably for its temperature resistance. The fibres of the glass mineral wool may: comprise > 55 wt-% silicon oxide (SiO₂) and/or < 10 wt-% aluminium oxide (Al₂O₃); and/or an alkali/alkaline-earth ratio of their composition which is > 1; and/or a combined quantity of CaO and MgO < 20 wt-%; and/or a combined quantity of Na₂O and K₂O > 8 wt%; and/or a density ≥ 5 kg/m³ and/or ≤ 60 kg/m³. The rock mineral fibres may: comprise between 30 and 55 wt-% SiO₂ and/or between 10 and 30 wt-% Al₂O₃; and/or an alkali/alkaline-earth ratio of their composition which is < 1; and/or a combined quantity of CaO and MgO ranging from 20 to 30 wt-%; and/or a combined quantity of Na₂O and K₂O < 8 wt%; and/or a density ≥ 65 kg/m³ and/or ≤ 200 kg/m³.

The mineral wool blanket may comprise a binder, notably an organic binder. When an organic binder is used, the quantity of the binder may be ≤ 5 wt%, ≤ 4 wt%, ≤ 3 wt%, ≤ 2 wt%, ≤ 1.5 wt%, ≤ 1 wt%, ≤ 0.8 wt%, ≤ 0.5 wt%, ≤ 0.2 wt% or ≤ 0.1 wt%. Preferably, when a binder is used the quantity of binder is ≥ 0.2 and ≤ 0.8 wt-%. The absence of significant quantities of organic binder is helpful when fire resistant properties are desired. The insulating blanket and/or insulating element may be free of organic binder. The mineral wool blanket may have an organic content and/or a hydrocarbon content which is ≤ 0.5 wt%, ≤ 0.2 wt% or ≤ 0.1 wt%. The organic content and/or the hydrocarbon content may include organic compounds comprised in any organic binder. Preferably the mineral wool blanket is substantially free of organic materials with an organic content and/or a hydrocarbon content which is ≤ 0.5 wt%.

The mineral wool blanket may be provided with a reinforcing framework; this may be located on at least one major surface or inside the mineral wool blanket body. Preferably, the reinforcing framework is flexible. The reinforcing framework may be a mesh of the type described herein. The framework may be stitched into and/or adhered to the mineral wool blanket. In addition to providing improved mechanical strength, a reinforcing framework inside the blanket body helps maintain homogeneity of the insulation properties, notably homogeneity in the density of the mineral wool blanket, notably by helping to avoid stretching or pulling apart of the mineral fibres during installation.

The mineral wool insulating element may have a density which is ≥ 5 kg/m³, ≥ 10 kg/m³, ≥ 20 kg/m³, ≥ 40 kg/m³, ≥ 60 kg/m³ or ≥ 80 kg/m³ and/or ≤ 100 kg/m³, ≤ 120 kg/m³, ≤ 140 kg/m³, ≤ 200 kg/m³ or ≤ 250 kg/m³. The mineral wool insulating element may have dimensions before installation and/or when installed which include:
- a thickness which is ≥ 2 cm and/or ≤ 40 cm; or
- a thickness which is ≥ 3 cm or ≥ 5 cm or ≥ 7 cm and/or ≤ 30 cm, or ≤ 20 cm ≤ 15 cm or ≤ 10 cm or ≤ 8 cm; and/or
- a length which is ≥ 0.5 m, ≥ 1 m or ≥ 2 m and/or ≤ 9 m, or ≤ 6 m or ≤ 4 m; and/or
- a width which is ≥ 0.2 m, ≥ 0.4 m or ≥ 0.5 m and/or ≤ 2.8 m, ≤ 2 m, ≤ 1.5 m or ≤ 1.2 m. The thickness of the mineral wool insulating mat is determined in accordance with the relevant EN product standard, notably associated with the relevant EN measurement standard, for example in accordance with EN13162 or EN14303, as applicable on 30 June 2016.

The mineral wool insulating mat may have a fire rating of at least a class B and preferably class A2 or A1 according to EN 13501-1 and test method EN 13820. It may be rated for use at continuous operating temperatures up to a maximum service temperature (MST) which is ≥ 100 °C, ≥ 150 °C, ≥ 200 °C, ≥ 300 °C, ≥ 400 °C, ≥ 500 °C or ≥ 600 °C and/or ≤ 1000 °C or ≤ 800 °C. The MST is determined according to EN 14706.

The mineral wool insulating element may comprise a facing, for example a veil or a metallised foil, notably an aluminium foil, positioned over one or each of its major surfaces. The facing may be positioned at a major surface of the mineral wool blanket a) between the mineral wool blanket and the associated non-metallic mesh or b) over the associated mesh. The facing may be bonded to the mineral wool insulating element, for example with an inorganic adhesive.

The mineral wool insulating element may be substantially flexible or non-rigid to allow it to be wrapped or rolled around and/or to conform to the contours of a supporting substrate, when installed. The mineral wool insulating mat may be provided in the form of a roll, notably a roll having a height corresponding to the widths mentioned above.

The mineral wool mat may have a thermal conductivity (λ) in mW/(mK) according to EN12667 of:
≤ 45 or ≤ 42 at 50°C; and/or
≤ 50 or ≤ 49 at 100°C; and/or
≤ 70 or ≤ 69 at 200°C; and/or
≤ 100 or ≤ 98 at 300°C; and/or
≤ 118 or ≤ 115 at 400°C; and/or
≤ 153 or ≤ 150 at 500°C; and/or
≤ 201 or ≤ 198 at 600°C.

The mineral wool insulating element may be particularly suitable for providing thermal and/or acoustic and/or fire insulation, for example for: buildings insulation; marine insulation; insulation of heating, ventilating and air conditioning (HVAC) ducts; and industrial insulation, for example insulation of pipes (notably metal pipes), pipe elbows, boilers and tanks. When non-rigid or flexible, mineral wool insulating elements are particularly suitable for wrapping around large diameter high temperature pipework. The meshed mat may significantly reduce noise generated by liquid and granular materials transported through pipework at high velocity.

In addition to retaining the mineral wool blanket between them, non-metallic meshes preferably provide an absence of sharp projections (the metal meshes of wired mats must be carefully handled to avoid scratches, notably from loose metallic threads ends). The non-metallic meshes, particularly when combined with non-metallic fasteners, are also particular suitable for providing dielectric insulating mats and/or avoiding the risk of electrical conduction through the mineral wool blanket. Furthermore, the non-metallic meshes and non-metallic fasteners, particularly when they consist of or consist essentially of non-metallic material(s) may be introduced in a mineral wool melting furnace for recycling the mineral wool along with the mineral wool waste notably without removal of the meshes and fasteners; this greatly facilitates recycling. The use of non-metallic meshes may be used to minimise thermal bridges through the mineral wool blanket and/or provide a surface which is corrosion resistant, for example rust resistant and/or which is suitable for contact with steel supporting structures or pipes. In some cases, use of non-metallic meshes and/or non-metallic fasteners provides advantageous corrosion resistance; this may facilitate use in circumstance where the mineral wool insulating element may be exposed to corrosive surroundings, for example salt water spray or mist, and avoid the necessity for corrosion resistant metal meshes of, for example, specific grades of stainless steel. The mesh or meshes, notably in combination with the fasteners, may contribute to providing resilience to the mineral wool insulating element, for example contributing to recovery of the shape and or dimensions following compression, for example following compression for packaging. In some cases, the mineral wool insulating element may be configured to be folded or wrapped around a support, for example wrapped around an arc having a radius of 10cm and a length of 8 cm, without plastic deformation or "memory effect" of the mineral wool insulating element; in this case, the mineral wool insulating element preferably resumes its original configuration, for example a substantially planar configuration, when unwrapped and can thus be easily wrapped around a pipe or other support, removed for inspection or maintenance and re-wrapped around the same or a different support. The use of non-metallic meshes and fasteners may also facilitate cutting of the mineral wool element; this is a significant advantage, notably on site, when workers have to resize the insulating element to fit closely to the geometry of the desired installation. Preferably, the non-metallic mesh, notably in combination with the fasteners, provide a combination of two or more of these features.

The mineral wool blanket may have a homogeneous density throughout its thickness. Alternatively, the density of the mineral wool blanket be non-homogeneous, for example varying progressively or step wise through its thickness. For example, the density at a surface layer of one of the major surfaces of the mineral wool blanket, notably at a surface layer having a thickness of 5mm, 10mm, 15mm or 20 mm, may be greater than the density of a surface layer at the other major surface having the same thickness, notably with a difference in density which is ≥ 10 kg/m³, ≥ 20 kg/m³, ≥ 30 kg/m³ or ≥ 40 kg/m³. This may be achieved by use of a dual density mineral wool blanket, that is to say a blanket provided with a surface layer which has undergone greater thickness compression than another portion of the blanket prior to being assembled therewith. Assembly of the surface layer may comprise adhesion, for example in a curing oven, and/or assembly by means of the fasteners of the mineral wool insulating element. A high surface density may be used to enhance fire or flame resistance, for example for the external surface of a pipe or ducting insulation, whilst the lower density of the remaining portion of the mineral wool blanket, for example arranged toward the inside surface of a pipe or ducting insulation, may be used to enhance thermal insulation by reducing the thermal conductivity (lambda (λ) value).

In accordance with a further aspect, the present invention provides a structure comprising a mineral wool insulating element as described herein folded or wrapped around a support. In this case, the mineral wool insulating element is preferably substantially flexible or non-rigid to allow it to be wrapped or rolled around and/or to conform to the contours of the support. The support may comprise: a support structure; a building support, for example a beam notably a metal beam, for example an I section beam; a pipe, pipe elbow, boiler or tank, notably of meta; a marine structure, for example part of the structure, hull, deck, bulkhead, floor, airducts, pipes or fittings of a marine vessel; a heating, ventilating or air conditioning duct. Particularly in the case of a marine structure, the mineral wool insulation may be secured to a support structure, notably a metal support structure, by pins which are secured to the support structure, for example by welding, and which pass partially or entirely through the mineral wool insulating element. Attachment by pins is particularly suitable for walls and/or ceilings of a marine or other structure. The mineral wool insulating element may be hung from such pins, for example subsequent to securing of the pins to the support structure. A head of the pin may contact the non-metallic mesh of the mineral wool insulating element; the non-metallic mesh may be arranged between the head of the pin and the support structure.

Different embodiments will now be described, by way of example only, with reference to the accompanying drawing of which:
Fig. 1 is a perspective view of a first embodiment of a mineral wool insulating element;
Fig. 2 is a plan view of the mineral wool insulating element of Fig 1;
Fig. 3 is a perspective view of a second embodiment;
Fig. 4 is a perspective view of a third embodiment;
Fig. 5 is a perspective view of a fourth embodiment;
Fig. 6 is a cross-section of a fifth embodiment;
Fig. 7 is a plan view of the mineral wool insulating element of Fig 6;
Fig. 8 is a cross-section through a sixth embodiment of a mineral wool insulating element;
Fig. 9 is a cross-section through a seventh embodiment;
Fig. 10 and Fig 11 are cross-sections through an eighth embodiment;
Fig. 12 is a perspective view of a ninth embodiment.
Only embodiments covered by the scope of the claims form part of the invention.
The drawings are not intended to be to scale. For illustrative purposes i) some elements which are positioned at or on surfaces of the mineral wool blanket, notably the meshes, are shown spaced from the surfaces and ii) when the mesh comprises an open structure having interstices, this is not illustrated in the perspective views.

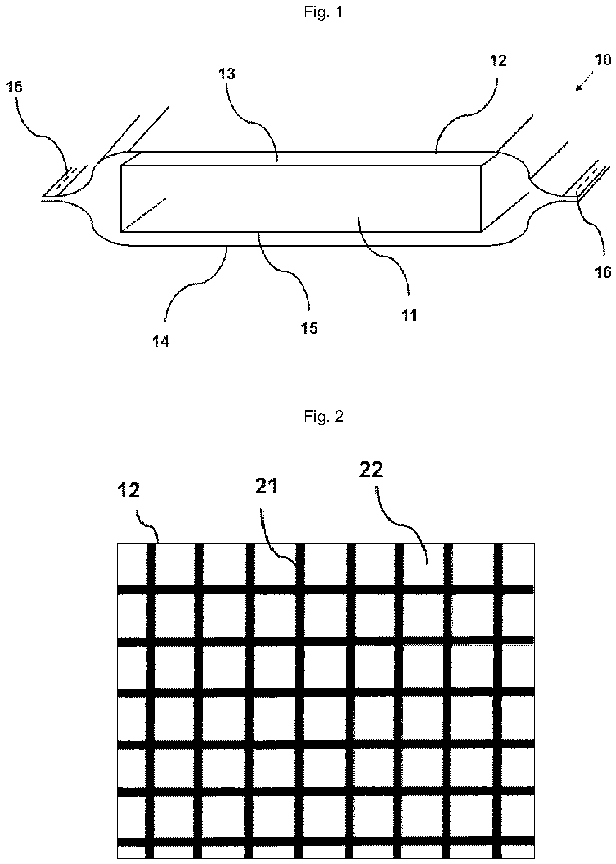

Fig 1 and Fig 2 illustrate a first embodiment of a mineral wool insulating element 10 which consists of a rock mineral wool blanket 11 sandwiched between a first non-metallic mesh 12 arranged at a first major surface 13 of the mineral wool blanket and a second non-metallic mesh 14 arranged at a second major surface 15 of the mineral wool blanket. Both of the non-metallic meshes 12 and 14 are made of intertwined carbon fibres 21 with square openings 22 of an internal aperture area of 9 cm². The first and the second non-metallic meshes 12 and 14 are connected by a plurality of fasteners 16 consisting of aramid threads which are sewn through superimposed flaps of the non-metallic meshes projecting beyond the edges of the mineral wool blanket. In this manner the meshes 12, 14 joined by the sewn threads form a sleeve around the blanket 11 which retains the mineral wool blanket sandwiched between the first and the second non-metallic meshes. The blanket 11 may include a low quantity of organic binder, for example between 0.3%wt and 0.8% wt, for example to facilitate handling during manufacturing.

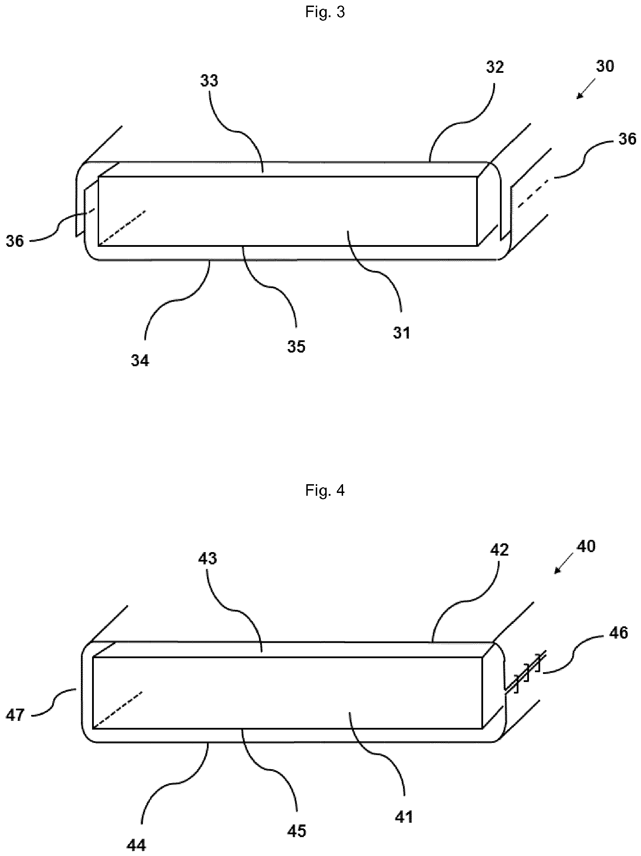

In the embodiment of Fig 3 illustrating a mineral wool insulating element 30, first and second non-metallic meshes 32 and 34 arranged on respective major surfaces 33, 35 are connected by a plurality of fasteners 36 comprising threads which are sewn through overlapping flaps of the first and the second non-metallic meshes which extend along the side faces of a mineral wool blanket 31.

In another embodiment (not illustrated) the plurality of fasteners 16, 36 illustrated in Fig 1 or Fig 3 connecting the first and the second meshes are replaced with a system of hook and loop fasteners providing a reversible closure. In such embodiments one of the edges of the first and the second meshes comprises a strip equipped with hooks while the other opposite edge of other mesh comprises a strip equipped with loops.

In the embodiment shown in Fig 4 illustrating a mineral wool insulating element 40, first and second non-metallic meshes 42 and 44 arranged on respective major surfaces 43, 45 also form a sleeve which surrounds a mineral wool blanket 41 of a mineral wool insulating element 40. The sleeve is formed by wrapping a single piece of mesh around the mineral wool blanket and the sleeve is closed by connecting the flaps of the mesh 42 and 44 at their edges with staples or stitched threads. In the illustrated embodiment the edges of the flaps abut; alternatively, they may superimpose or overlap as illustrated respectively in Fig 1 and Fig 3. The sleeve is closed with fasteners 46 at three sides (only one side of closure is shown in Fig 4) with a fourth side 47 being formed by a fold in the sleeve which also provides a fastener connecting the two meshes.

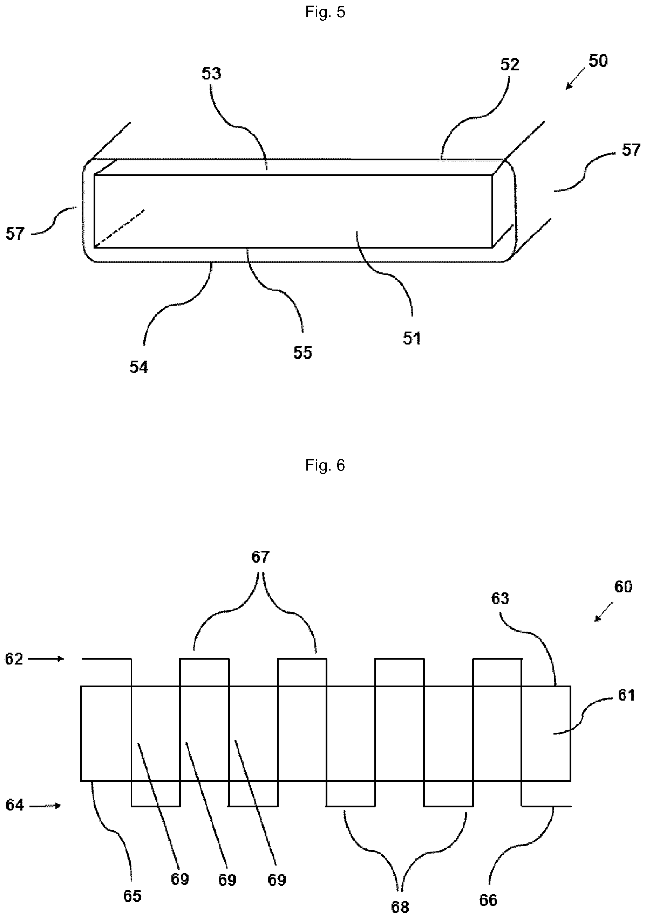

In the embodiment of Fig. 5 illustrating a mineral wool insulating element 50, a sleeve comprising first and second non-metallic meshes 52, 54, which are arranged on respective major surfaces 43, 45, is pre-formed in the form of a tube into which a mineral wool blanket 51 can be introduced. The sides 57 of the sleeve act as fasteners which connect the first 52 and second 54 meshes together. The sleeve is also provided with fasteners at two opposite sides (not shown in Fig 5) to close it ends which are initially open.

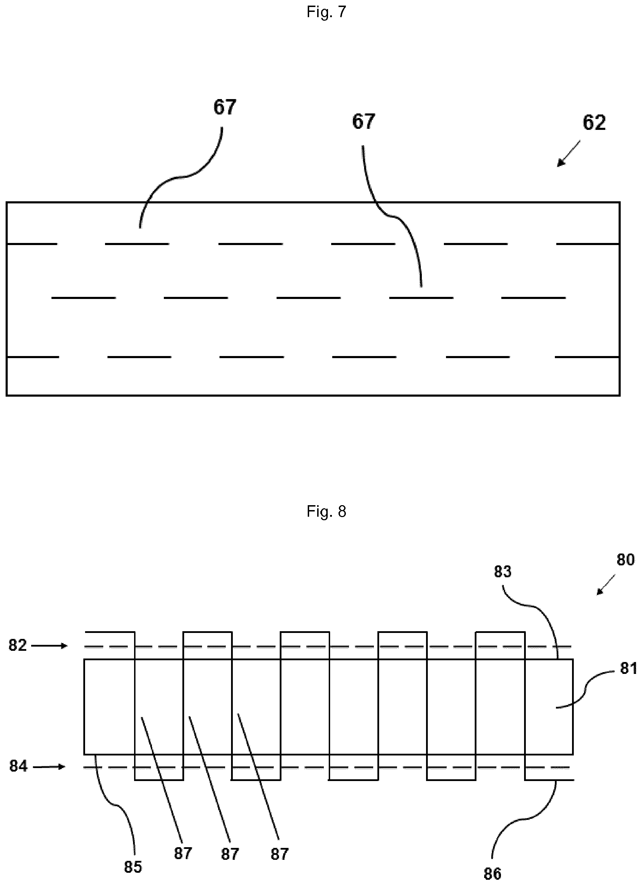

Fig.6 and Fig 7 shows a mineral wool mat 60 comprising a rock mineral wool blanket 61 sandwiched between a first 62 and a second 64 non-metallic mesh arranged on respective major surfaces 63, 65 of the mineral wool blanket. The first and the second non-metallic meshes 62 and 64 are formed by aramid threads 66 which are sewn through the rock mineral wool blanket: each of the first and the second non-metallic meshes consisting of a network formed respectively by portions 67, 68 of the aramid threads 66 passing along the major surfaces 63, 65 of the mineral wool blanket. Portions 69 of the aramid threads 66 passing through the mineral wool blanket 61 form fasteners which connect the first and the second non-metallic meshes 62, 64 together so as to retain the mineral wool blanket sandwiched between them. Fig.7 shows the lengths 67 of the aramid threads passing along the major surfaces 63 and which form the first non-metallic mesh 62.

Fig 8 shows a mineral wool insulating mat 80 comprising of rock mineral wool blanket 81 sandwiched between a first non-metallic mesh 82 arranged at a first major surface 83 and a second non-metallic mesh 84 arranged at a second major surface 85. Each of the non-metallic meshes are made of woven aramid fibres having 10 mm square apertures between the fibres. The non-metallic meshes 82, 84 are connected by being sewn together with galvanised steel threads 86 that pass through the mineral wool blanket 81 and are stitched through the aramid meshes 82 and 84. Portions 87 of the galvanised steel threads which pass through the mineral wool blanket provide fasteners which connect the first and second non-metallic meshes together so as to retain the mineral wool blanket sandwiched between them.

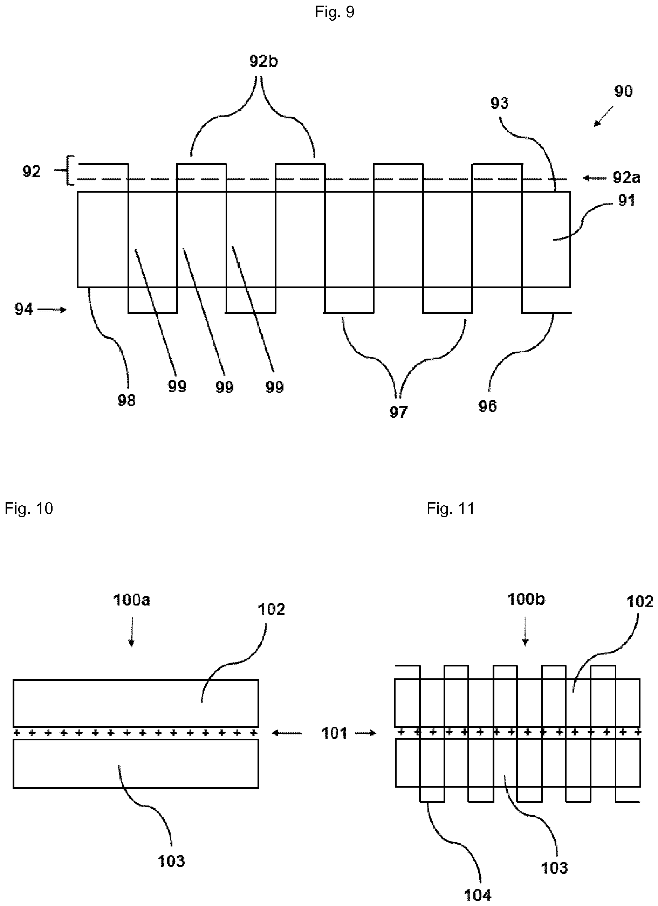

In the arrangement shown in Fig 9, a first non-metallic mesh 92 arranged at a first major surface 93 of the mineral wool blanket 91 comprises the combination of i) aramid mesh 92a of woven poly paraphenylene terephthalamide fibres with square apertures of 15 mm between the fibres and ii) first surface portions 92b of aramid threads 96. The aramid threads 96 are sewn through the first aramid mesh 92a and through the mineral wool blanket 91. Second surface portions 97 of the aramid threads 96 passing along the second major surface 98 of the mineral wool blanket 91 form a second non-metallic mesh 94 whilst traversing portions 99 of the aramid threads 96 which pass through the mineral wool blanket provide fasteners which connect the first and second non-metallic meshes together.

Fig 10 and Fig 11 show an embodiment in which a reinforcing mesh is located inside the mineral wool blanket. The mineral wool blanket 100a, 100b is obtained by sandwiching a reinforcing mesh 101 between two partial mineral wool blankets 102, 103. In the illustrated embodiment of Fig 11 the reinforcing mesh is kept in place by stitching 104 similar to that of Fig 6.

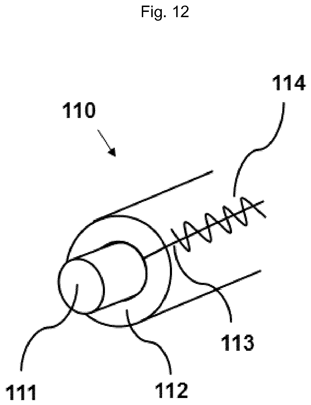

Fig. 12 illustrates a mineral wool element 112 wrapped around a pipe 111 and having abutting edges of its non-metallic mesh 112 at its outer surface 114 wrapped sewn to form a closure line 113 thus retaining the insulating element in position around the pipe.

## Claims

1. A mineral wool insulating element comprising:
- a mineral wool blanket comprising mineral fibres;
- a first non-metallic mesh arranged at a first major surface of the mineral wool blanket;
- a second mesh arranged at a second major surface of the mineral wool blanket; and a plurality of fasteners comprising threads sewn through the mineral wool blanket and arranged to connect the first and second meshes together so as to retain the mineral wool blanket sandwiched between the first and the second meshes;
wherein the mineral wool insulating element is a mineral wool mat held together by being sandwiched between the meshes covering its first major surface and its second major surface,
wherein the said meshes covering the second major surface consist of the second mesh; and
wherein the second mesh consists of a network of one of more of the threads formed by portions of the thread(s) passing along the second major surface of the mineral wool blanket.

2. A mineral wool insulating element (90) according to claim 1 in which the fasteners (96) comprise non-metallic threads.

3. A mineral wool insulating element (90) according to claim 2 in which the non-metallic threads comprise mineral fibres, organic fibres, basalt fibres, glass fibres, carbon fibres, synthetic fibres, polyethylene terephthalate (PET) fibres, polysulphone fibres, aramid fibres, para-aramid fibres or poly paraphenylene terephthalamide fibres .

4. A mineral wool insulating element (90) according to claim 2 or claim 3, in which the first non-metallic mesh (92) consists of non-metallic material(s).

5. A mineral wool insulating element (90) according to claim 1 in which the fasteners (96) comprise metallic threads.

6. A mineral wool insulating element (90) according to claim 5 in which the metallic threads comprise steel wire.

7. A mineral wool insulating element (90) according to any preceding claim in which any organic binder comprised in the mineral wool blanket is present in a quantity which is ≤ 2.5 wt%, notably ≤ 1.0 wt%, more notably ≤ 0.5 wt%.

8. A mineral wool insulating element (90) according to any preceding claim, in which the first non-metallic mesh (92) comprises square or rectangular openings, each side of such square or rectangular openings being ≥ 20mm and ≤ 70 mm.

9. A mineral wool insulating element (90) according to any preceding claim, in which the first non-metallic mesh (92) comprises square openings being within the range 20 mm x 20 mm to 50 mm x 50 mm.

10. A mineral wool insulating element (90) according to any preceding claim in which the first non-metallic mesh (92) comprises fibres selected from natural fibres, synthetic fibres, aramid fibres, para-aramid fibres, poly paraphenylene terephthalamide fibres, carbon fibres, mineral fibres, basalt fibres and glass fibres.

11. A mineral wool insulating element (90) according to any preceding claim in which the first non-metallic mesh (92) comprises a woven mesh or a loosely netted mesh.

12. A mineral wool insulating element (90) according to any preceding claim having at least one of the following features:
- a density in the range 5 kg/m³ to 250 kg/m³;
- a thickness in the range 1 cm to 40 cm, in accordance with EN13162 or EN14303;
- in which the mineral fibres comprise fibres selected from rock fibres, glass fibres and a mixture thereof;
- in which each of the first and second meshes has a weight in the range 0.05 kg/m² to 3.0 kg/m² ;
- in which the mineral wool insulating element has a fire rating according to EN 13501-1 selected from A2 and A1.

13. A mineral wool insulating element (90) according to any preceding claim having a thermal conductivity (λ) in mW/(mK) according to EN12667 of:
≤ 45 or ≤ 42 at 50°C; and/or
≤ 50 or ≤ 49 at 100°C; and/or
≤ 70 or ≤ 69 at 200°C; and/or
≤ 100 or ≤ 98 at 300°C; and/or
≤ 118 or ≤ 115 at 400°C; and/or
≤ 153 or ≤ 150 at 500°C; and/or
≤ 201 or ≤ 198 at 600°C.

14. An insulated structure comprising a pipe and a mineral wool insulating element (90) in accordance with any of claims 1 to 13 wrapped around the pipe.

15. A marine structure comprising a support structure, notably a marine deck, bulkhead, floor, airduct or pipe and a mineral wool insulating element (90) in accordance with any of claims 1 to 13 assembled with the marine structure so as to conform to the contours of the marine structure.

## Patentansprüche

1. Mineralwolle-Dämmelement, umfassend:
- eine Mineralwolldecke, umfassend Mineralfasern;
- ein erstes nicht-metallisches Netz, das an einer ersten Hauptoberfläche der Mineralwolldecke angeordnet ist;
- ein zweites Netz, das an einer zweiten Hauptoberfläche der Mineralwolldecke angeordnet ist; und eine Mehrzahl von Befestigungselementen, umfassend Fäden, die durch die Mineralwolldecke hindurch genäht sind und so angeordnet sind, dass sie die ersten und die zweiten Netze miteinander verbinden, um die Mineralwolldecke sandwichartig zwischen den ersten und den zweiten Netzen zu halten;
wobei das Mineralwolle-Dämmelement eine Mineralwollmatte ist, die sandwichartig zwischen den Netzen gehalten wird, die ihre erste Hauptfläche und ihre zweite Hauptfläche bedecken,
wobei die Netze, die die zweite Hauptoberfläche bedecken, aus dem zweiten Netz bestehen; und
wobei das zweite Netz aus einem Netzwerk aus einem oder mehreren der Fäden besteht, die durch Abschnitte des Fadens/der Fäden gebildet werden, die entlang der zweiten Hauptfläche der Mineralwollmatte verlaufen.

2. Mineralwolle-Dämmelement (90) nach Anspruch 1, bei dem die Befestigungselemente (96) nicht-metallische Fäden umfassen.

3. Mineralwolle-Dämmelement (90) nach Anspruch 2, bei dem die nichtmetallischen Fäden Mineralfasern, organische Fasern, Basaltfasern, Glasfasern, Kohlenstofffasern, synthetische Fasern, Polyethylenterephthalat (PET)-Fasern, Polysulfonfasern, Aramidfasern, Para-Aramidfasern oder PolyParaphenylenterephthalamidfasern umfassen.

4. Mineralwolle-Dämmelement (90) nach Anspruch 2 oder Anspruch 3, bei dem das erste nicht-metallische Netz (92) aus nicht-metallischem(n) Material(en) besteht.

5. Mineralwolle-Dämmelement (90) nach Anspruch 1, bei dem die Befestigungselemente (96) Metallfäden umfassen.

6. Mineralwolle-Dämmelement (90) nach Anspruch 5, bei dem die Metallfäden Stahldraht umfassen.

7. Mineralwolle-Dämmelement (90) nach einem der vorhergehenden Ansprüche, bei dem jedes organisches Bindemittel, das die Mineralwolldecke umfasst, in einer Menge von ≤ 2,5 Gew.-%, insbesondere ≤ 1,0 Gew.-%, vor allem ≤ 0,5 Gew.-% vorliegt.

8. Mineralwolle-Dämmelement (90) nach einem der vorhergehenden Ansprüche, bei dem das erste nicht-metallische Netz (92) quadratische oder rechteckige Öffnungen umfasst, wobei jede Seite solcher quadratischen oder rechteckigen Öffnungen ≥ 20 mm und ≤ 70 mm ist.

9. Mineralwolle-Dämmelement (90) nach einem der vorhergehenden Ansprüche, bei dem das erste nicht-metallische Netz (92) quadratische Öffnungen umfasst, die im Bereich von 20 mm x 20 mm bis 50 mm x 50 mm liegen.

10. Mineralwolle-Dämmelement (90) nach einem der vorhergehenden Ansprüche, bei dem das erste nicht-metallische Netz (92) Fasern umfasst, die aus Naturfasern, synthetischen Fasern, Aramidfasern, Para-Aramidfasern, Polyparaphenylenterephthalamidfasern, Kohlenstofffasern, Mineralfasern, Basaltfasern und Glasfasern ausgewählt sind.

11. Mineralwolle-Dämmelement (90) nach einem der vorhergehenden Ansprüche, bei dem das erste nicht-metallische Netz (92) ein gewebtes Netz oder ein lockeres Netzgewebe umfasst.

12. Mineralwolle-Dämmelement (90) nach einem der vorangehenden Ansprüche mit mindestens einem der folgenden Merkmale:
- einer Dichte im Bereich von 5 kg/m³ bis 250 kg/m³;
- einer Dicke im Bereich von 1 cm bis 40 cm, gemäß EN13162 oder EN14303;
- wobei die Mineralfasern Fasern umfassen, die aus Gesteinsfasern, Glasfasern und einem Gemisch davon ausgewählt sind;
- wobei jede des ersten und zweiten Netzes ein Gewicht im Bereich von 0,05 kg/m² bis 3,0 kg/m² aufweist;
- wobei das Mineralwolle-Dämmelement eine Brandklasse gemäß EN 13501-1 aufweist, die aus A2 und A1 ausgewählt ist.

13. Mineralwolle-Dämmelement (90) nach einem der vorhergehenden Ansprüche mit einer Wärmeleitfähigkeit (λ) in mW/(mK) gemäß EN12667 von:
≤ 45 oder ≤ 42 bei 50°C; und/oder
≤ 50 oder ≤ 49 bei 100°C; und/oder
≤ 70 oder ≤ 69 bei 200°C; und/oder
≤ 100 oder ≤ 98 bei 300°C; und/oder
≤ 118 oder ≤ 115 bei 400°C; und/oder
≤ 153 oder ≤ 150 bei 500°C; und/oder
≤ 201 oder ≤ 198 bei 600°C.

14. Isolierte Struktur, umfassend ein Rohr und ein Mineralwolle-Dämmelement (90) nach einem der Ansprüche 1 bis 13, das um das Rohr gewickelt ist.

15. Schiffskonstruktion, umfassend eine Tragkonstruktion, insbesondere ein Schiffsdeck, ein Schott, einen Boden, einen Luftkanal oder ein Rohr und ein Mineralwolle-Dämmelement (90) nach einem der Ansprüche 1 bis 13, das mit der Schiffskonstruktion so zusammengebaut ist, dass es den Konturen der Schiffskonstruktion entspricht.

## Revendications

1. Élément isolant de laine minérale comprenant :
- une couverture de laine minérale comprenant des fibres minérales ;
- un premier treillis non métallique agencé sur une première surface principale de la couverture de laine minérale ;
- un deuxième treillis agencé sur une deuxième surface principale de la couverture de laine minérale ; et une pluralité de fixations comprenant des fils cousus à travers la couverture de laine minérale et agencées pour relier les premier et deuxième treillis ensemble de manière à retenir la couverture de laine minérale prise en sandwich entre le premier et le deuxième treillis ;
dans lequel l'élément isolant de laine minérale est un matelas de laine minérale tenu ensemble en étant pris en sandwich entre les treillis recouvrant sa première surface principale et sa deuxième surface principale,
dans lequel lesdits treillis recouvrant la deuxième surface principale consistent en le deuxième treillis ; et
dans lequel le deuxième treillis consiste en un réseau d'un ou de plusieurs fils formés par des portions du ou des fils passant le long de la deuxième surface principale de la couverture de laine minérale.

2. Élément isolant de laine minérale (90) selon la revendication 1 dans lequel les fixations (96) comprennent des fils non métalliques.

3. Élément isolant de laine minérale (90) selon la revendication 2, dans lequel les fils non métalliques comprennent des fibres minérales, des fibres organiques, des fibres de basalte, des fibres de verre, des fibres de carbone, des fibres synthétiques, des fibres de polyéthylène téréphtalate (PET), des fibres de polysulfone, des fibres d'aramide, des fibres de para aramide ou des fibres de poly paraphénylène téréphtalamide.

4. Élément isolant de laine minérale (90) selon la revendication 2 ou la revendication 3, dans lequel le premier treillis non métallique (92) consiste de matière(s) non métallique(s).

5. Élément isolant de laine minérale (90) selon la revendication 1 dans lequel les fixations (96) comprennent des fils métalliques.

6. Élément isolant de laine minérale (90) selon la revendication 5 dans lequel les fils métalliques comprennent un fil en acier.

7. Élément isolant de laine minérale (90) selon l'une quelconque revendication précédente, dans lequel un quelconque liant organique compris dans la couverture de laine minérale est présent dans une quantité qui est ≤ 2,5% en poids, notamment ≤ 1,0% en poids, plus notamment ≤ 0,5% en poids.

8. Élément isolant de laine minérale (90) selon l'une quelconque revendication précédente, dans lequel le premier treillis non métallique (92) comprend des orifices carrés ou rectangulaires, chaque côté d'orifices carrés ou rectangulaires de ce type étant ≥ 20 mm et ≤ 70 mm.

9. Élément isolant de laine minérale (90) selon l'une quelconque revendication précédente, dans lequel le premier treillis non métallique (92) comprend des orifices carrés situés dans l'intervalle de 20 mm × 20 mm à 50 mm × 50 mm.

10. Élément isolant de laine minérale (90) selon l'une quelconque revendication précédente, dans lequel le premier treillis non métallique (92) comprend des fibres sélectionnées parmi les fibres naturelles, les fibres synthétiques, les fibres d'aramide, les fibres de para aramide, les fibres de poly paraphénylène téréphtalamide, les fibres de carbone, les fibres minérales, les fibres de basalte et les fibres de verre.

11. Élément isolant de laine minérale (90) selon l'une quelconque revendication précédente, dans lequel le premier treillis non métallique (92) comprend un treillis tissé ou un treillis en filet lâche.

12. Élément isolant de laine minérale (90) selon l'une quelconque revendication précédente, ayant au moins l'une des particularités suivantes :
- une densité dans l'intervalle compris entre 5 kg/m³ et 250 kg/m³ ;
- une épaisseur dans l'intervalle compris entre 1 cm et 40 cm, selon la norme EN13162 ou EN14303 ;
- dans lequel les fibres minérales comprennent des fibres sélectionnées parmi les fibres de roche, les fibres de verre et un mélange de celles-ci ;
- dans lequel chacun des premier et deuxième treillis présentent un poids dans l'intervalle compris entre 0,05 kg/m² et 3.0 kg/m² ;
- dans lequel l'élément isolant de laine minérale présente au classement au feu conforme à la norme EN 13501-1 sélectionné parmi A2 et A1.

13. Élément isolant de laine minérale (90) selon l'une quelconque revendication précédente présentant une conductivité thermique (λ) en mW/(mK) selon la norme EN12667 de :
≤ 45 ou ≤ 42 à 50°C; et/ou
≤ 50 ou ≤ 49 à 100°C; et/ou
≤ 70 ou ≤ 69 à 200°C; et/ou
≤ 100 ou ≤ 98 à 300°C; et/ou
≤ 118 ou ≤ 115 à 400°C; et/ou
≤ 153 ou ≤ 150 à 500°C; et/ou
≤ 201 ou ≤ 198 à 600°C.

14. Structure isolée comprenant un tuyau et un élément isolant de laine minérale (90) selon l'une quelconque des revendications 1 à 13 enroulé autour du tuyau.

15. Structure marine comprenant une structure de support, notamment un pont marin, une cloison de bateau, un sol, un conduit d'air ou un tuyau et un élément isolant de laine minérale (90) selon les quelconques revendications 1 à 13 assemblé à la structure marine de manière à épouser les contours de la structure marine.
